(19) Europäisches Patentamt
European Patent Office
Office européen des brevets

(11) **EP 3 830 440 B1**

(12) **EUROPÄISCHE PATENTSCHRIFT**

(45) Veröffentlichungstag und Bekanntmachung des Hinweises auf die Patenterteilung:
**31.08.2022   Patentblatt 2022/35**

(21) Anmeldenummer: **19733770.2**

(22) Anmeldetag: **26.06.2019**

(51) Internationale Patentklassifikation (IPC):
***F16D 48/02*** *(2006.01)*

(52) Gemeinsame Patentklassifikation (CPC):
**F16D 48/02;** F16D 2048/0221; F16D 2048/0263; F16D 2048/0266; F16D 2048/0278; F16D 2500/1105

(86) Internationale Anmeldenummer:
**PCT/EP2019/066997**

(87) Internationale Veröffentlichungsnummer:
**WO 2020/025223 (06.02.2020 Gazette 2020/06)**

(54) **HYDRAULISCHE STEUEREINRICHTUNG UND SCHIFFSGETRIEBE**

HYDRAULIC CONTROL DEVICE AND MARINE TRANSMISSION

ÉQUIPEMENT DE COMMANDE HYDRAULIQUE ET TRANSMISSION DE BATEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2018   DE 102018212766**

(43) Veröffentlichungstag der Anmeldung:
**09.06.2021   Patentblatt 2021/23**

(73) Patentinhaber: **ZF Friedrichshafen AG
88046 Friedrichshafen (DE)**

(72) Erfinder: **STAMML, Michael
78462 Konstanz (DE)**

(74) Vertreter: **ZF Friedrichshafen AG
Gewerblicher Rechtsschutz
Löwentalerstraße 20
88046 Friedrichshafen (DE)**

(56) Entgegenhaltungen:
DE-A1-102008 043 276      DE-A1-102015 209 478
JP-A- S59 103 032

## Beschreibung

Die Erfindung bezieht sich auf eine hydraulische Steuereinrichtung, insbesondere für ein Schiffsgetriebe, gemäß der im Oberbegriff von Anspruch 1 definierten Art und auf ein Schiffsgetriebe mit einer derartigen hydraulischen Steuereinrichtung.

In Schiffsantrieben werden hydraulische Steuereinrichtungen verwendet, um damit den Druckaufbau in Kupplungszylindern von hydraulisch betätigten Schaltkupplungen zu regeln. In der Regel sind hydraulisch betätigten Schaltkupplungen in Schiffsantrieben druckgeschlossene Kupplungen, sodass das Betätigen der Schaltkupplung dem Schließen der Schaltkupplung entspricht. Eine gezielte Druckregelung beim Schließen einer hydraulisch betätigten Schaltkupplung ist erforderlich, um Drehmomentstöße und daraus folgende hohe mechanische Belastungen und Komforteinbußen zu vermeiden. Häufig wird dabei ein Druckanstieg entlang einer vorgegebenen Druckrampe angestrebt. In diesem Zusammenhang wird auch von Druckmodulation gesprochen. Dabei wird eine sanfte, aber auch möglichst schnelle Zuschaltung der dazugehörigen hydraulisch betätigten Schaltkupplung angestrebt. In Schiffsantrieben wird dazu häufig eine mechanische Druckmodulation angewendet, welche mittels Druckfedern, Steuerkolben und Blenden realisiert wird, wodurch auf aufwändige und störanfällige elektronische Steuerungskomponenten verzichtet werden kann.

Die mechanische Druckmodulation wird jedoch in unerwünschter Weise beeinflusst durch temperaturbedingte Änderungen der Viskosität des Druckmediums. Üblicherweise werden in hydraulischen Steuereinrichtungen von Schiffsgetrieben Mineralöle der Viskositätsklassen SAE30, SAE40 oder Mehrbereichsöle als Druckmedium verwendet. Bei niedrigen Temperaturen ist die Viskosität des Druckmediums höher und die Schaltzeit der hydraulisch betätigten Schaltkupplung verlängert sich infolge höherer Druckverluste in den Leitungen und Bauteilen der hydraulischen Steuereinrichtung. Bei sehr niedrigen Temperaturen kann sich die Schaltzeit deutlich verlängern.

Aus der EP 1 980 767 A2 ist eine hydraulische Steuereinrichtung zur Regelung eines Druckaufbaus beim Betätigen einer hydraulisch betätigbaren Schaltkupplung für ein Schiffsgetriebe bekannt. Diese umfasst ein Drucksteuerventil mit einem Regelkolben und einem Modulationskolben, die zusammen in einer konzentrischen Bohrung angeordnet sind und durch zumindest eine Feder auseinandergedrückt werden. Ferner umfasst diese hydraulische Steuereinrichtung eine Verzögerungseinrichtung mit Drosselstellen, deren Querschnitte selbsttätig in Abhängigkeit von der Temperatur verstellend sind. Damit soll der Durchflusswiderstand der Drosseln über der Temperatur konstant gehalten werden und der Einfluss der Temperatur auf die Dauer des Schaltvorgangs minimiert werden. Dies ist mit der hydraulischen Steuereinrichtung gemäß der EP 1 980 767 A2 nur begrenzt möglich.

Siehe auch DE 10 2015 209478 als Stand der Technik.

Der vorliegenden Erfindung liegt die Aufgabe zugrunde eine alternative hydraulische Steuereinrichtung für ein Schiffsgetriebe zu schaffen, bei der der Einfluss von Temperaturunterschieden auf die Druckmodulation und folglich auf Schaltzeiten von angesteuerten Schaltkupplungen noch weiter minimiert oder ganz eliminiert ist. Ferner beinhaltet die Erfindung ein Schiffsgetriebe mit einer derart verbesserten hydraulischen Steuereinrichtung.

Diese Aufgaben werden durch eine hydraulische Steuereinrichtung für ein Schiffsgetriebe mit den Merkmalen des Anspruchs 1 sowie durch ein Schiffsgetriebe mit den Merkmalen des Anspruchs 6 gelöst. Vorteilhafte weitere Ausführungsformen der Erfindung sind in den jeweiligen abhängigen Ansprüchen angegeben.

Demnach wird eine hydraulische Steuereinrichtung mit einem Drucksteuerventil vorgeschlagen. Die vorgeschlagene hydraulische Steuereinrichtung soll insbesondere zur Regelung eines Druckaufbaus beim Betätigen einer hydraulisch betätigbaren Schaltkupplung verwendet werden. Das Drucksteuerventil ist vorzugsweise in einem Steuerungsgehäuse angeordnet. Das Drucksteuerventil umfasst einen Regelkolben und einen Modulationskolben, die gegeneinander verschiebbar sind. Der Regelkolben und der Modulationskolben können dazu in zwei Bohrungen in dem genannten Steuerungsgehäuse verschiebbar angeordnet sein. Die beiden Bohrungen und die beiden genannten Kolben sind bevorzugt koaxial zueinander angeordnet und weisen unterschiedliche Durchmesser auf. Vorzugsweise haben der Modulationskolben und die ihm zugeordnete Bohrung entsprechend größere Durchmesser als der Regelkolben und die ihm zugeordnete Bohrung. Die beiden zueinander koaxialen Bohrungen können ineinander übergehen, sodass auch von einer Stufenbohrung gesprochen werden kann, in der der Regelkolben und der Modulationskolben verschiebbar angeordnet sind.

Der Regelkolben und der Modulationskolben werden durch zumindest eine Feder auseinandergedrückt. Bevorzugt können beispielsweise zwei Druckfedern zwischen den beiden Kolben angeordnet sein und diese auseinanderdrücken. Auf einer Stirnseite des Modulationskolbens ist dabei ein Druckraum angeordnet, sodass die Befüllung des Druckraums eine Verschiebung des Modulationskolbens in Richtung des Regelkolbens bewirkt. Der Druckraum ist durch eine erste Drossel mit einem ersten Volumenstrom $Q1$ eines Druckmediums befüllbar. Die erste Drossel kann in einer Leitung angeordnet sein, die eine Kupplungsdruckleitung mit dem Druckraum verbindet. Die Kupplungsdruckleitung kann den Druckausgang eines Kupplungsventils mit einer Druckkammer einer hydraulisch betätigten Schaltkupplung verbinden. Die erste Drossel kann auch als Summe der Strömungswiderstände von Leitungen sowie gegebenenfalls einer Blende und eines Filtersiebs betrachtet werden. Konkrete Ausführungsbeispiele derartiger hydraulische Steuereinrichtungen sind beispielsweise in der EP 1 980 767 A2 und in der EP 0 756 677 B1 beschrieben.

Gemäß der vorliegenden Erfindung ist an den Druckraum eine Entlüftungsleitung mit zumindest einer weiteren Drossel angeschlossen. Über die weitere Drossel ist ein zweiter Volumenstrom Q2 aus dem Druckraum ableitbar. Bei einer Druckbeaufschlagung des Druckraums über die erste Drossel ergibt sich in dem Druckraum als Differenzwert zwischen dem ersten Volumenstrom Q1 und dem zweiten Volumenstrom Q2 ein dritter Volumenstrom Q3. Die an den Druckraum angeschlossene Entlüftungsleitung mit der weiteren Drossel hat den Effekt, dass die weitere Drossel auf Temperaturänderungen zumindest ähnlich reagiert wie die erste Drossel, wodurch sich der Volumenstrom Q2 durch die weitere Drossel in der gleichen Richtung verändert wie der Volumenstrom Q1 durch die erste Drossel. Der Volumenstrom Q3 als Differenzwert zwischen dem ersten Volumenstrom Q1 und dem zweiten Volumenstrom Q2 ist dadurch weniger temperaturbedingten Änderungen unterworfen als bei herkömmlichen hydraulischen Steuereinrichtungen ohne Entlüftungsleitung. Folglich kann eine unerwünschte Temperaturabhängigkeit des Volumenstrom Q3 in dem Druckraum zumindest teilweise ausgeglichen werden.

Während der Druckmodulierung steigt das Volumen des Druckraumes an. Dadurch wird der Modulationskolben gegen eine Federkraft der Feder in Richtung des Regelkolbens bewegt. Dadurch steigt wiederum der Druck zur Betätigung der dazugehörigen Schaltkupplung entsprechend an. Dieser Anstieg und Druckverlauf ist mithilfe der Erfindung zumindest weniger abhängig von der Temperatur und der Viskosität des Druckmediums. Die Volumenveränderung über der Zeit kann mithilfe der Erfindung zumindest nahezu konstant gehalten werden. Folglich sind die Reaktionszeiten beim Schließen einer hydraulisch betätigten Schaltkupplung mithilfe der hydraulischen Steuereinrichtung ebenfalls weniger abhängig von der Temperatur. Mit anderen Worten kann die hydraulisch betätigte Schaltkupplung bei jeder Temperatur zumindest nahezu gleich schnell geschlossen werden.

Vorzugsweise ist vorgesehen, dass die jeweiligen Abmessungen der ersten Drossel und der weiteren Drossel so aufeinander abgestimmt sind, dass sich ein als Differenzwert zwischen dem ersten Volumenstrom Q1 und dem zweiten Volumenstrom Q2 einstellender Volumenstrom Q3 in dem Druckraum temperaturstabil verhält. Mit anderen Worten können die Abmessungen der beiden Drosseln so aufeinander abgestimmt sein, dass temperaturbedingte Volumenstromänderungen ganz ausgeglichen und somit vermieden werden. Die Abmessungen der beiden Drosseln können insbesondere durch gezielte Auswahl von deren Durchmessern und Bohrungslängen aufeinander abgestimmt werden. Der Fachmann ist in der Lage optimale Abmessungen der beiden Drosseln durch Berechnungen zu ermitteln. In nachfolgenden Versuchen kann das tatsächliche Verhalten dann geprüft und erforderlichenfalls noch angepasst werden. Als temperaturstabil gelten dabei auch Bedingungen, bei denen noch sehr geringe temperaturbedingte Volumenstromänderungen vorhanden sind, sofern die dadurch entstehenden geringfügig veränderten Schaltzeiten einer dazugehörigen Schaltkupplung für einen Schiffsführer nicht spürbar sind.

Alternativ oder zusätzlich zu der Abstimmung der Abmessungen der ersten Drossel und der weiteren Drossel können auch eine oder beide Drosseln als temperaturabhängig selbstverstellbare Drosseln ausgeführt werden. Die selbstverstellende Funktion wird dabei beispielsweise mithilfe von Bimetallen erzielt.

Ein weiterer Vorteil der Erfindung ist, dass für die erste Drossel größere Durchmesser gewählt werden können, ohne dass sich die Schaltzeit verändert. Dazu muss lediglich der Durchmesser bzw. die Abmessungen der weiteren Drossel entsprechend angepasst werden.

Gemäß einer weiteren bevorzugten Ausführung ist vorgesehen, dass die Entlüftungsleitung in einen Federraum des Drucksteuerventils mündet, in dem die zumindest eine Feder angeordnet ist. Dadurch ist eine sehr kompakte Ausführung des Drucksteuerventils möglich. Ferner werden keine zusätzlichen Bauteile benötigt. Der Begriff Feder soll jedes elastische Element umfassen, das geeignet ist, den Regelkolben und/oder den Modulationskolben in Richtung seiner jeweiligen Endstellung zu drücken. Die Feder kann insbesondere als eine Druckfeder ausgeführt sein. Vorteilhaft können in dem Federraum auch zwei Druckfedern angeordnet sein, die den Regelkolben und den Modulationskolben auseinander und jeweils in Richtung einer Endposition drücken. Beim Zusammendrücken während der Druckmodulation können mithilfe von zwei Druckfedern Druckrampen mit unterschiedlich steilen Anstiegen realisiert werden.

Besonders bevorzugt kann die Entlüftungsleitung mit der weiteren Drossel in dem Modulationskolben integriert sein. Die Entlüftungsleitung ist im einfachsten Fall als eine Durchgangsbohrung ausgeführt, die gleichzeitig als weitere Drossel fungiert. Das heißt, dass kein separates Bauteil als Drossel erforderlich ist. Die Durchgangsbohrung ist in diesem Fall die weitere Drossel. Die Durchgangsbohrung kann durch den stirnseitigen Deckel des Modulationskolbens hindurch verlaufen. Dabei verbindet die Durchgangsbohrung bzw. die Entlüftungsleitung den Druckraum mit dem Federraum.

Die Erfindung umfasst ferner ein Schiffsgetriebe mit einer hydraulischen Steuereinrichtung nach einer der oben beschriebenen Ausführungsformen.

Weitere Merkmale und Vorteile der Erfindung sind den anliegenden Figuren und der nachfolgenden Figurenbeschreibung zu entnehmen.

Dabei zeigen die

Fig. 1    einen Ausschnitt aus einer hydraulische Steuereinrichtung für ein Schiffsgetriebe nach dem Stand der Technik in schematischer Darstellung;

Fig. 2 ein Diagramm mit dem Druckverlauf eines Kupplungsdrucks bei einem Schiffsgetriebe mit einer hydraulischen Steuereinrichtung gemäß Fig. 1;

Fig. 3 einen Ausschnitt aus einer erfindungsgemäßen hydraulische Steuereinrichtung für ein Schiffsgetriebe in schematischer Darstellung und

Fig. 4 ein Diagramm mit dem Druckverlauf eines Kupplungsdrucks bei einem Schiffsgetriebe mit einer hydraulischen Steuereinrichtung gemäß der Fig. 3.

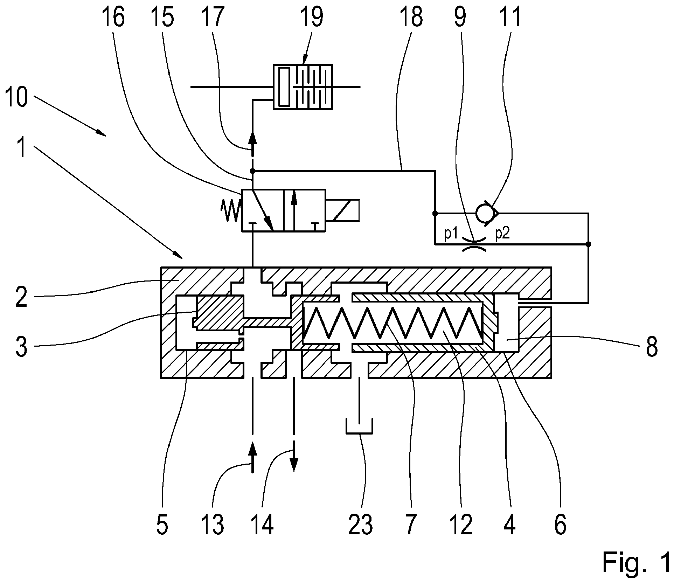

Die in Fig. 1 zeigt den prinzipiellen Aufbau eines Teils einer hydraulischen Steuereinrichtung mit einem Drucksteuerventils 1 nach dem Stand der Technik. Das Drucksteuerventil 1 weist einen Regelkolben 3 und einen Modulationskolben 4 auf, die in einem Steuerungsgehäuse 2 koaxial zueinander angeordnet und gegeneinander verschiebbar sind. Der Regelkolben 3 und der Modulationskolben 4 sind jeweils in einer Bohrung 5, 6 des Steuerungsgehäuses 2 verschiebbar angeordnet. Die Bohrung 5 des Regelkolbens 3 ist koaxial zu der Bohrung 6 des Modulationskolbens 4 angeordnet, sodass auch der Regelkolben 3 koaxial zu dem Modulationskolben 4 angeordnet ist. Die Bohrung 5 des Regelkolbens 3 weist einen geringeren Durchmesser auf als die Bohrung 6 des Modulationskolbens 4. Die Durchmesser der beiden genannten Kolben 3, 4 weisen dementsprechend ebenfalls unterschiedliche Durchmesser auf.

Zwischen dem Regelkolben 3 und dem Modulationskolben 4 ist eine Feder 7 angeordnet, die die beiden Kolben 3, 4 auseinanderdrückt. Die Feder 7 ist vorliegend als Schraubendruckfeder ausgeführt. Auf einer Stirnseite des Modulationskolbens 4 ist ein Druckraum 8 derart angeordnet, dass dessen Befüllung eine Verschiebung des Modulationskolbens 4 in Richtung des Regelkolbens 3 bewirkt.

Das Drucksteuerventil 1 weist einen Ölversorgungsanschluss 13 auf, der mit einer nicht dargestellten Pumpe in Verbindung steht. Die Pumpe stellt das Druckmedium an dem Ölversorgungsanschluss 13 mit einem ausreichenden Systemdruck zur Verfügung. Das Drucksteuerventil 1 weist darüber hinaus einen Schmierungsanschluss 14 auf, über den verschiedene Schmierstellen mit Druckmedium versorgbar sind. Das Druckmedium kann dabei gleichzeitig der Schmierung und Kühlung von Komponenten dienen.

Schließlich umfasst die hydraulische Steuereinrichtung ein Kupplungsventil 16, das in einer Kupplungsdruckleitung 15 angeordnet ist. Durch Betätigen des Kupplungsventils 16 kann ein Druckausgang des Drucksteuerventils 1 über einen Kupplungsdruckanschluss 17 mit einer Druckkammer einer hydraulisch betätigten Schaltkupplung 19 verbunden werden. Wenn das Kupplungsventil 16 unbetätigt ist, so ist bzw. wird die dazugehörige Schaltkupplung 19 entlüftet. Der Modulationskolben 4 befindet sich dann in Fig. 1 rechts im Anschlag. Die Feder 7 drückt auf den Regelkolben 3 und es stellt sich entsprechend ein niedriger Druck gemäß der Federkraft der Feder 7 ein, welcher am Kupplungsventil 16 ansteht. Wird nun das Kupplungsventil 16 betätigt, so fließt das Druckmedium in die Druckkammer der Schaltkupplung 19, aber auch über eine Verbindungsleitung 18 und eine erste Drossel 9 in den Druckraum 8 hinter den Modulationskolben 4. Der Druckraum 8 ist auf diese Weise über die erste Drossel 9 mit Druckmedium befüllbar. Ein Rückschlagventil 11, das in der Verbindungsleitung 18 parallel zu der ersten Drossel 9 angeordnet ist, ist während des Befüllens des Druckraums 8 geschlossen. Der Volumenstrom, der beim Befüllen des Druckraums 8 durch die erste Drossel 9 in den Druckraum 8 strömt, wird als Volumenstrom Q1 bezeichnet.

In der Fig. 1 ist ein erster Druck $p_1$ eingetragen, der zwischen der Kupplungsdruckleitung 15 und der ersten Drossel 9 ansteht. Ferner ist in der Fig. 1 ein zweiter Druck $p_2$ eingetragen, der in der Verbindungsleitung 18 zwischen der ersten Drossel 9 und dem Druckraum 8 ansteht. Dabei gilt zumindest annähernd

$p_1$ = F_Druckfeder/ A_Regelkolben;
und für $p_2$ gilt zumindest annähernd
$p_2$ = F_Druckfeder / A_Modulationskolben,
wobei
F_Druckfeder die Federkraft der Feder 7 ist,
A_Regelkolben die Fläche des Regelkolbens ist und
A_Modulationskolben die Fläche des Modulationskolbens ist.

Da A_Regelkolben kleiner ist als A_Modulationskolben, ergibt sich an der ersten Drossel 9 entsprechend eine positive Druckdifferenz bzw. ein Druckabfall, welcher den Volumenstrom Q1 verursacht. Die erste Drossel 9 stellt hierbei die Summe der Strömungswiderstände von Leitungen, ggf. einer Blende und einem Filtersieb dar.

Der Druckraum 8 wird nun bei betätigtem Kupplungsventil 16 befüllt und der Modulationskolben 4 fährt entsprechend langsam nach links und spannt die Feder 7 weiter vor. Es ergibt sich eine Druckrampe. Die Druckrampe steigt bei dieser Ausführungsvariante an bis der Modulationskolben 4 schließlich auf den Regelkolben 3 trifft, der dann zwangsweise nach links verschoben wird und die Steuerkante zur Schmierung 14 schließt. Dann steigt der Druck sprunghaft an auf ein Systemdruckniveau, welches von einem nicht dargestellten Systemdruckventil geregelt wird. Der Regelkolben 3 weist eine Steuergeometrie mit Steuerkanten auf, die beim Verschieben des Regelkolbens den Druck am Kupplungsdruckanschluss 17 und somit auch den Druck $p_1$ steuert. Die Funktion des Drucksteuerventils 1 sorgt nun dafür,

dass der Druck $p_1$ ansteigt, wodurch auch der Druck in der Druckkammer der dazugehörigen Schaltkupplung 19 entsprechend ansteigt. Diese Funktion des Drucksteuerventils 1 ist dem Fachmann beispielsweise aus der eingangs genannten EP 1 980 767 A2 bekannt, auf welche hiermit Bezug genommen wird.

Der auf den Volumenstrom Q1 wirkende Strömungswiderstand der ersten Drossel 9 ist abhängig von der Viskosität des Druckmediums. Somit verändert sich in Abhängigkeit der Temperatur des Druckmediums der Volumenstrom Q1. Die Geschwindigkeit des Modulationskolbens ändert sich somit auch über die Temperatur. Die Schaltzeit der hydraulisch betätigten Schaltkupplung 19 ist dadurch bei dieser Ausführungsform erheblichen temperaturabhängigen Schwankungen unterworfen.

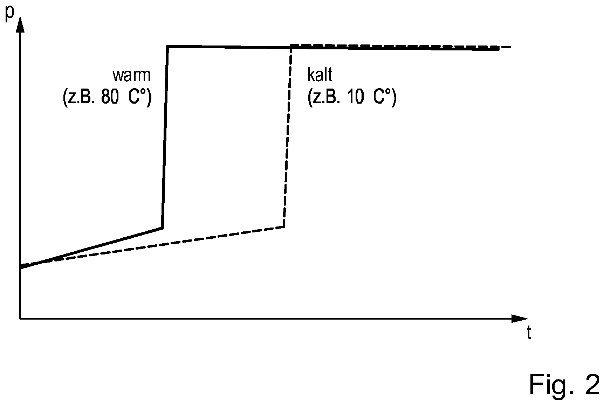

Die genannten temperaturabhängigen Schwankungen gehen aus der Fig. 2 hervor. Dort ist ein Diagramm mit dem Druckverlauf eines Kupplungsdrucks beim Betätigen der Schaltkupplung 19 mit einer herkömmlichen hydraulischen Steuereinrichtung 10 bei kalten und bei warmen Bedingungen dargestellt.

Auf der horizontalen Achse des Diagramms ist die Zeit t dargestellt. Die vertikale Achse repräsentiert den Kupplungsdruck p. Die durchgezogene Funktionslinie repräsentiert den Verlauf des Kupplungsdrucks beim Zuschalten der Schaltkupplung 19 bei warmen Bedingungen, beispielsweise bei 80 Grad Celsius. Die Punktlinie repräsentiert den Verlauf des Kupplungsdrucks beim Zuschalten der Schaltkupplung 19 bei kalten Bedingungen, beispielsweise bei 10 Grad Celsius. Es ist deutlich erkennbar, dass der Kupplungsdruck bei kalten Bedingungen mit einer deutlichen zeitlichen Verzögerung ansteigt. Dies hat zur Folge, dass die Schaltkupplung mit einer entsprechenden zeitlichen Verzögerung geschlossen wird. Derartige temperaturbedingt veränderte Schaltzeiten der Schaltkupplung sind unerwünscht.

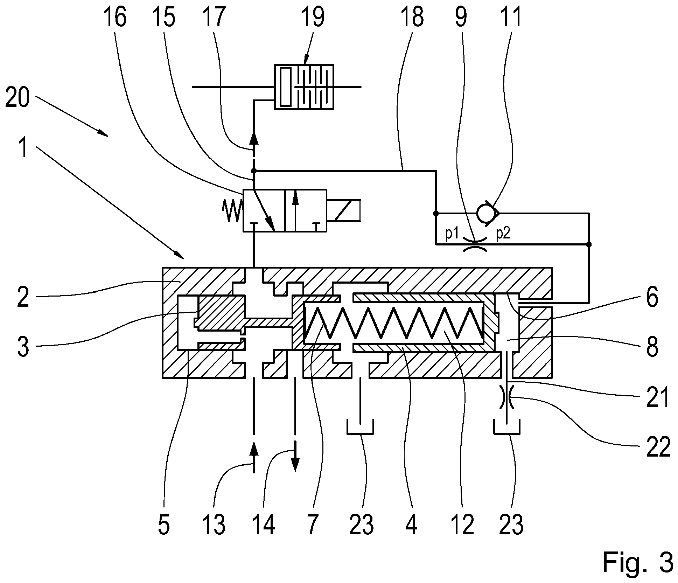

Die Lösung der problematischen temperaturabhängigen Schaltzeiten ist in Form der erfindungsgemäßen hydraulischen Steuereinrichtung 20 für ein Schiffsgetriebe in Fig. 3 dargestellt. Die hydraulische Steuereinrichtung gemäß der Fig. 3 entspricht zu überwiegenden Umfang der Steuereinrichtung aus der Fig. 1. Deshalb sind gleiche Komponenten in der Fig. 1 und in der Fig. 3 mit dem gleichen Bezugszeichen versehen und gleiche Funktionen werden hier nicht nochmals erläutert.

Bei der erfindungsgemäßen hydraulischen Steuereinrichtung 20 ist an den Druckraum 8 eine Entlüftungsleitung 21 mit einer weiteren Drossel 22 angeschlossen. Über die Entlüftungsleitung 21 mit der weiteren Drossel 22 ist ein zweiter Volumenstrom Q2 aus dem Druckraum 8 ableitbar, sodass sich in dem Druckraum 8 ein Volumenstrom Q3 aus der Differenz zwischen dem ersten Volumenstrom Q1 und dem zweiten Volumenstrom Q2 ergibt. Die Abmessungen der ersten Drossel 9 und der weiteren Drossel 22 sind so aufeinander abgestimmt, dass der Volumenstrom Q3 über die Temperatur zumindest nahezu konstant bleibt. Dadurch erfolgt der modulierte Druckaufbau nach dem Betätigen des Kupplungsventils 16 unabhängig von der Temperatur immer in gleicher Weise. Folglich sind auch die Schaltzeiten der Schaltkupplung 19 unabhängig von der Temperatur des Druckmediums.

Mit anderen Worten wird dem Druckraum 8 ein zusätzlicher Verbraucher in Form der Entlüftungsleitung 21 mit der weiteren Drossel 22 hinzugefügt. Das Druckmedium kann durch die Entlüftungsleitung 21 beispielsweise in einen Rücklaufbehälter 23 entlüftet werden. Aus dem Rücklaufbehälter 23 kann eine Pumpe das Druckmedium erneut ansaugen und in Umlauf bringen. Auch die weitere Drossel 22 bzw. der Volumenstrom durch die weitere Drossel 22 ist viskositäts- bzw. temperaturabhängig. Allerdings sind die Durchmesser und Bohrungslängen der beiden Drosseln 9 und 22 nun so aufeinander abgestimmt, dass sich der Volumenstrom Q3 in der Druckkammer 8 temperaturstabil verhält. Es gilt folgender Zusammenhang:

$$Q3 = Q1 - Q2,$$

wobei

Q3 der resultierende Volumenstrom in der Druckkammer 8,
Q1 der Volumenstrom durch die erste Drossel 9 und
Q2 der Volumenstrom durch die weitere Drossel 22 ist.

Verringert sich aufgrund steigender Viskosität der Volumenstrom Q1, so verringert sich auch Q2 und das Ergebnis der Subtraktion von Q1 - Q2 bleibt idealerweise konstant. Somit wird der Viskositäts- bzw. Temperatur-Einfluss deutlich verringert oder sogar eliminiert. Die Druckmodulation und die Schaltzeiten sind nur noch sehr geringfügig abhängig vom Druckmedium und dessen Temperatur.

Es fließt kontinuierlich eine konstante geringe Ölmenge durch das Ventil bzw. durch den Kolbenraum 8 hinter dem Modulationsventil. Das hat den Vorteil, dass Luft bei langen Stillstandszeiten entweichen kann, die ansonsten aufgrund ihrer Kompressibilität nachteilige Auswirkungen auf die Druckmodulation und auf das Schaltverhalten haben kann. Des Weiteren wird Restöl herausgespült, welches beispielsweise beim Getriebeprüflauf noch im Kolbenraum verblieben ist. Auch unerwünschte Temperaturunterschiede gleichen sich durch die kontinuierlich durchfließende Ölmenge aus. Ein weiterer Vorteil ergibt sich dadurch, dass für die erste Drossel 9 größere Durchmesser gewählt werden können, ohne dass sich die Schaltzeit verlängert. Die Gefahr des Verstopfens der Drosseln 9, 22 verringert sich dadurch. Das Verhältnis von Durchmesser zu Bohrungslänge wird durch die Vergrößerung des Durchmessers besser und die erste Drossel 9 kommt einer idealen Blende sehr nahe, was sich wiederum auch positiv auf das Temperaturverhalten auswirkt. Eine ideale Blende ist eine plötzlich auftretende Restriktion in einem rotationssymmetrischen Kanal in Form einer Bohrung mit einer möglichst geringen Bohrungslänge, wobei das Verhältnis von Blendendurchmesser zu Kanaldurchmesser kleiner als 0,2 ist.

Noch ein weiterer Vorteil ist die einfache Umsetzung der Erfindung. Es sind z.B. keine weiteren Bauteile notwendig, wenn die weitere Drossel 22 in den Modulationskolben 4 integriert und in den Federraum 12 entlüftet wird. Dazu kann beispielsweise eine einfache Durchgangsbohrung durch die Stirnseite des Modulationskolbens 4 als weitere Drossel 22 genügen. Die Durchgangsbohrung verbindet dabei den Druckraum 8 mit dem Federraum 12 und bildet so die Entlüftungsleitung 21 mit der weiteren Drossel 22. Vorzugsweise ist deren Durchmesser einer solchen Durchgangsbohrung so auf die Abmessungen der ersten Drossel 9 abgestimmt, dass sich die Steuereinrichtung temperaturstabil verhält wie oben erläutert.

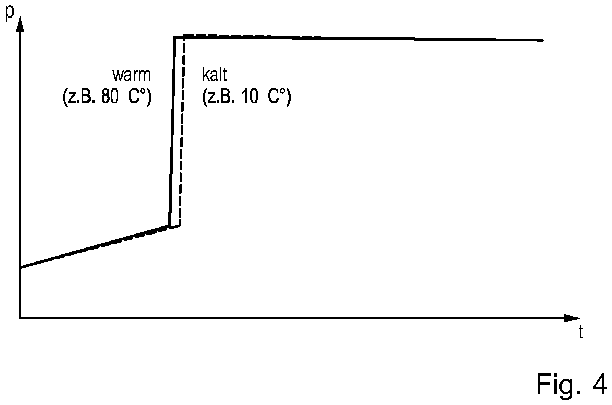

Schließlich zeigt die Fig. 4 ein Diagramm mit dem Druckverlauf eines Kupplungsdrucks beim Betätigen der Schaltkupplung 19 mit der erfindungsgemäßen hydraulischen Steuereinrichtung 20 bei kalten und bei warmen Bedingungen.

Auf der horizontalen Achse des Diagramms ist wieder die Zeit t dargestellt und die vertikale Achse repräsentiert den Kupplungsdruck p. Die durchgezogene Funktionslinie repräsentiert den Verlauf des Kupplungsdrucks beim Zuschalten der Schaltkupplung 19 bei warmen Bedingungen, beispielsweise bei 80 Grad Celsius. Die Punktlinie repräsentiert den Verlauf des Kupplungsdrucks beim Zuschalten der Schaltkupplung 19 bei kalten Bedingungen, beispielsweise bei 10 Grad Celsius. Es ist erkennbar, dass der Kupplungsdruck bei kalten Bedingungen nahezu ohne zeitliche Verzögerung ansteigt, im Vergleich zum Druckanstieg bei warmen Bedingungen. Dies hat zur Folge, dass die Schaltkupplung 19 auch bei kalten Bedingungen nahezu ohne zeitliche Verzögerung geschlossen wird. Geringfügige Verzögerungen, wie sie auch durch die geringe Abweichung der beiden Funktionslinien im Diagramm der Fig. 4 gezeigt sind, können auch in der Praxis weiterhin entstehen. Mithilfe der Erfindung lassen sich solche Verzögerungen jedoch zumindest soweit reduzieren, dass die daraus folgenden verzögerten Schaltzeiten der Schaltkupplung 19 für den Schiffsführer nicht mehr spürbar sind.

Eine geringfügig verlängerte Schaltzeit aufgrund von niedrigen Öltemperaturen kann bei bestimmten Anwendungen bzw. Schaltkupplungen auch gewünscht sein, da die Befüllzeit insbesondere bei großen Kupplungen bei kaltem Öl in der Regel auch länger dauert. Eine zu diesem Zweck geringfügig von der Temperatur abhängige längere Schaltzeit kann mithilfe der vorliegenden Erfindung aber gezielt eingestellt werden und ergibt sich nicht zufällig.

Bezugszeichen

| 1 | Drucksteuerventil |
| 2 | Steuerungsgehäuse |
| 3 | Regelkolben |
| 4 | Modulationskolben |
| 5 | Bohrung |
| 6 | Bohrung |
| 7 | Feder |
| 8 | Druckraum |
| 9 | erste Drossel |
| 10 | hydraulische Steuereinrichtung |
| 11 | Rückschlagventil |
| 12 | Federraum |
| 13 | Ölversorgungsanschluss |
| 14 | Schmierungsanschluss |
| 15 | Kupplungsdruckleitung |
| 16 | Kupplungsventil |
| 17 | Kupplungsdruckanschluss |
| 18 | Verbindungsleitung |
| 19 | Schaltkupplung |
| 20 | hydraulische Steuereinrichtung |
| 21 | Entlüftungsleitung |
| 22 | weitere Drossel |
| 23 | Rücklaufbehälter |

**Patentansprüche**

1. Hydraulische Steuereinrichtung (20) mit einem Drucksteuerventil (1), wobei das Drucksteuerventil (1) einen Regelkolben (3) und einen Modulationskolben (4) umfasst, die gegeneinander verschiebbar sind, wobei der Regelkolben (3) und der Modulationskolben (4) durch zumindest eine Feder (7) auseinandergedrückt werden, wobei auf einer Stirnseite des Modulationskolbens (4) ein Druckraum (8) derart angeordnet ist, dass dessen Befüllung eine Verschiebung des Modulationskolbens (4) in Richtung des Regelkolbens (3) bewirkt, und wobei der Druckraum (8) durch eine erste Drossel (9) mit einem ersten Volumenstrom Q1 eines Druckmediums befüllbar ist, **dadurch gekennzeichnet, dass** an den Druckraum (8) eine Entlüftungsleitung (21) mit zumindest einer weiteren Drossel (22) angeschlossen ist, durch die ein zweiter Volumenstrom Q2 aus dem Druckraum (8) ableitbar ist.

2. Hydraulische Steuereinrichtung nach Anspruch 1, **dadurch gekennzeichnet, dass** die jeweiligen Abmessungen der ersten Drossel (9) und der weiteren Drossel (22) so aufeinander abgestimmt sind, dass sich ein als Differenzwert zwischen dem ersten Volumenstrom Q1 und dem zweiten Volumenstrom Q2 einstellender Volumenstrom Q3 in dem Druckraum (8) temperaturstabil verhält oder eine gewünschte Temperaturabhängigkeit aufweist.

**3.** Hydraulische Steuereinrichtung nach Anspruch 1 oder 2, **dadurch gekennzeichnet, dass** die erste Drossel (9) und/oder die weitere Drossel (22) als temperaturabhängig selbstverstellbare Drossel ausgeführt ist, und dass die temperaturbedingte Verstellung jeder temperaturabhängig selbstverstellbaren Drossel gezielt so gewählt ist, dass sich in dem Druckraum (8) ein als Differenzwert zwischen dem ersten Volumenstrom Q1 und dem zweiten Volumenstrom Q2 einstellender dritter Volumenstrom Q3 temperaturstabil verhält oder dass sich ein gewünschter temperaturabhängiger Volumenstrom Q3 einstellt.

**4.** Hydraulische Steuereinrichtung nach einem der vorgenannten Ansprüche, **dadurch gekennzeichnet, dass** die Entlüftungsleitung (21) in einen Federraum (12) des Drucksteuerventils (1) mündet, in dem die zumindest eine Feder (7) angeordnet ist.

**5.** Hydraulische Steuereinrichtung nach einem der vorgenannten Ansprüche, **dadurch gekennzeichnet, dass** die Entlüftungsleitung (21) mit der weiteren Drossel (22) in dem Modulationskolben (4) integriert ist.

**6.** Schiffsgetriebe mit einer hydraulischen Steuereinrichtung (20) nach einem der vorgenannten Ansprüche.

**Claims**

**1.** Hydraulic control device (20) with a pressure control valve (1), the pressure control valve (1) comprising a control piston (3) and a modulation piston (4) which can be displaced with respect to one another, the control piston (3) and the modulation piston (4) being pressed apart from one another by way of at least one spring (7), a pressure space (8) being arranged on an end side of the modulation piston (4) in such a way that its filling brings about a displacement of the modulation piston (4) in the direction of the control piston (3), and it being possible for the pressure space (8) to be filled through a first throttle (9) with a first volumetric flow Q1 of a pressure medium, **characterized in that** a venting line (21) with at least one further throttle (22) is connected to the pressure space (8), through which venting line (21) a second volumetric flow Q2 can be discharged from the pressure space (8).

**2.** Hydraulic control device according to Claim 1, **characterized in that** the respective dimensions of the first throttle (9) and the further throttle (22) are matched to one another in such a way that a volumetric flow Q3 which is set as a differential value between the first volumetric flow Q1 and the second volumetric flow Q2 has a temperature-stable behaviour in the pressure space (8) or has a desired temperature dependence.

**3.** Hydraulic control device according to Claim 1 or 2, **characterized in that** the first throttle (9) and/or the further throttle (22) is configured as a throttle which is self-adjustable in a temperature-dependent manner, and **in that** the temperature-induced adjustment of each throttle which is self-adjustable in a temperature-dependent manner is selected in a targeted manner such that a third volumetric flow Q3 which is set as a differential value between the first volumetric flow Q1 and the second volumetric flow Q2 has a temperature-stable behaviour in the pressure space (8), or that a desired temperature-dependent volumetric flow Q3 is set.

**4.** Hydraulic control device according to one of the preceding claims, **characterized in that** the venting line (21) opens into a spring space (12) of the pressure control valve (1), in which spring space (12) the at least one spring (7) is arranged.

**5.** Hydraulic control device according to one of the preceding claims, **characterized in that** the venting line (21) with the further throttle (22) is integrated into the modulation piston (4).

**6.** Marine transmission with a hydraulic control device (20) according to one of the preceding claims.

**Revendications**

**1.** Dispositif de commande hydraulique (20) comprenant une soupape de commande de pression (1), la soupape de commande de pression (1) comprenant un piston de régulation (3) et un piston de modulation (4) qui peuvent être déplacés l'un par rapport à l'autre, le piston de régulation (3) et le piston de modulation (4) étant écartés l'un de l'autre par au moins un ressort (7), une chambre de pression (8) étant agencée sur un côté frontal du piston de modulation (4) de telle sorte que son remplissage provoque un déplacement du piston de modulation (4) en direction du piston de régulation (3), et la chambre de pression (8) pouvant être remplie par un premier étranglement (9) avec un premier débit volumique Q1 d'un fluide sous pression, **caractérisé en ce qu'**une conduite d'évacuation d'air (21) comprenant au moins un autre étranglement (22) est raccordée à la chambre de pression (8), par laquelle un deuxième débit volumique Q2 peut être dérivé de la chambre de pression (8) .

**2.** Dispositif de commande hydraulique selon la revendication 1, **caractérisé en ce que** les dimensions respectives du premier étranglement (9) et de l'autre étranglement (22) sont adaptées l'une à l'autre de telle sorte qu'un débit volumique Q3 s'établissant en tant que valeur différentielle entre le premier débit volumique Q1 et le deuxième débit volumique Q2 dans la chambre de pression (8) se comporte de manière stable avec la température ou présente une dépendance à la température souhaitée.

**3.** Dispositif de commande hydraulique selon la revendication 1 ou 2, **caractérisé en ce que** le premier étranglement (9) et/ou l'autre étranglement (22) sont réalisés sous forme d'étranglement autoréglable dépendant de la température, et **en ce que** le réglage en fonction de la température de chaque étranglement autoréglable dépendant de la température est choisi de manière ciblée de telle sorte qu'un troisième débit volumique Q3 s'établissant en tant que valeur différentielle entre le premier débit volumique Q1 et le deuxième débit volumique Q2 dans la chambre de pression (8) se comporte de manière stable avec la température ou qu'un débit volumique Q3 dépendant de la température souhaité s'établit.

**4.** Dispositif de commande hydraulique selon l'une quelconque des revendications précédentes, **caractérisé en ce que** la conduite d'évacuation d'air (21) débouche dans une chambre de ressort (12) de la soupape de commande de pression (1), dans laquelle est agencé l'au moins un ressort (7).

**5.** Dispositif de commande hydraulique selon l'une quelconque des revendications précédentes, **caractérisé en ce que** la conduite d'évacuation d'air (21) est intégrée avec l'autre étranglement (22) dans le piston de modulation (4).

**6.** Transmission de navire comprenant un dispositif de commande hydraulique (20) selon l'une quelconque des revendications précédentes.

EP 3 830 440 B1

Fig. 1

9

Fig. 2

Fig. 3

Fig. 4

**IN DER BESCHREIBUNG AUFGEFÜHRTE DOKUMENTE**

**In der Beschreibung aufgeführte Patentdokumente**

- EP 1980767 A2
- DE 102015209478

- EP 0756677 B1